# EUROPEAN PATENT APPLICATION

(11) **EP 4 057 300 A1**
(43) Date of publication of application: **14.09.2022**
(21) Application number: 20891931.6
(22) Date of filing: 28.08.2020
(51) Int. Cl.: H01B 7/08, H01B 7/02

(54) **PHOTOELECTRIC COMPOSITE CABLE AND OPTICAL COMMUNICATION SYSTEM**

(30) Priority: 25.11.2019 CN 201911165160
(71) Applicant: Huawei Technologies Co., Ltd., Shenzhen, Guangdong 518129 (CN)
(72) Inventor: ZHANG, Jinxing, Shenzhen, Guangdong 518129 (CN); WANG, Bo, Shenzhen, Guangdong 518129 (CN); QI, Biao, Shenzhen, Guangdong 518129 (CN); ZHANG, Qi, Shenzhen, Guangdong 518129 (CN)
(74) Representative: Gill Jennings & Every LLP
(86) International application number: PCT/CN2020/112116
(87) International publication number: WO 2021/103714

(57) **Abstract**

Embodiments of this application provide an optical/electrical hybrid cable and an optical communications system, and relate to the field of optical communications technologies. The optical/electrical hybrid cable includes a linear conductor, an optical fiber, and an outer sheath. The outer sheath tightly wraps exteriors of the conductor and the optical fiber, and the conductor and the optical fiber are arranged side by side. According to the optical/electrical hybrid cable and the optical communications system provided in the embodiments of this application, on the premise that an optical fiber cable and a power cable that are separated can be formed, a structure is simple, a manufacturing process is simplified, and an area of a cross section of the optical/electrical hybrid cable is reduced.

## Description

This application claims priority to Chinese Patent Application No. 201911165160.0, filed with China National Intellectual Property Administration on November 25, 2019 and entitled "OPTICAL/ELECTRICAL HYBRID CABLE AND OPTICAL COMMUNICATIONS SYSTEM", which is incorporated herein by reference in its entirety.

### TECHNICAL FIELD

This application relates to the field of optical communications technologies, and in particular, to an optical/electrical hybrid cable and an optical communications system.

### BACKGROUND

With the development of the 5th generation mobile network (5th Generation Mobile Network, 5G) and the next-generation fixed network, optical fiber-to-antenna, optical fiber-to-camera, optical fiber-to-traffic signal light, optical fiber-to-room, optical fiber-to-ceiling, and other optical fiber-to-access tail terminal demands are numerous. Optical fiber-to-access tail terminal builds foundation for high-speed instant communication in the intelligent era, meeting requirements for massive information and high-quality bandwidth in the intelligent era.

Both optical fiber cables and power cables need to be laid during access to access tail terminals. Therefore, optical fiber cables need to be laid again for the access tail terminals for which power cables have been laid. Therefore, an optical/electrical hybrid cable becomes a preferred solution to optical fiber-to-access tail terminals, that is, power-on and network connectivity are implemented through a single time of laying.

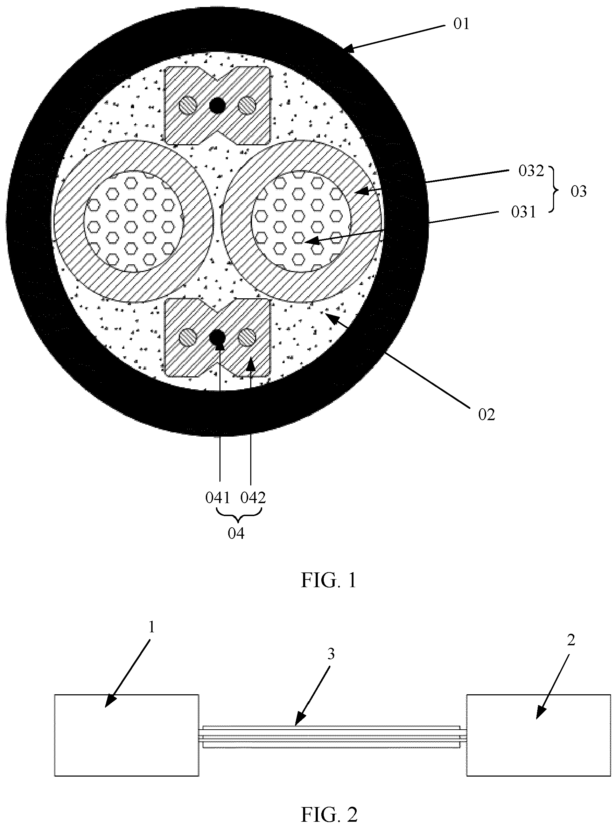

A 5G radio base station uses an optical/electrical hybrid cable shown in FIG. 1. The optical/electrical hybrid cable includes an outer sheath 01 of a hollow structure, two optical fiber cables 04 and two power cables 03 are arranged in the hollow structure of the outer sheath 01, and a filler 02 is filled in the hollow structure. Moreover, an end surface of the optical/electrical hybrid cable is circular. Referring to FIG. 1, the optical fiber cable 04 includes an optical fiber 041 and a jacket 042 that wraps an exterior of the optical fiber 041 (the jacket 042 is configured to increase tensile, compressive, and flexural strengths of the optical fiber 041). The power cable 03 includes a conductor 031 and an insulation cladding 032 that wraps an exterior of the conductor 031 (the insulation cladding 032 serves as an insulation and isolation structure of the conductor 031). That is, the optical fiber 041 is wrapped by the jacket 042 to form an optical fiber cable, and the conductor 031 is wrapped by the insulation cladding 032 to form a power cable. Because the optical fiber cable and the power cable are two cables separated from each other, the power cable and the optical fiber cable that are separated are bundled by using the outer sheath 01 (the outer sheath 01 has a specific strength to protect the power cable and the optical fiber cable) and the filler 02 (the filler 02 has a reinforcement function), to form an optical/electrical hybrid cable. During specific use, the outer sheath 01 is stripped, so that the power cable 03 and the optical fiber cable 04 are separated, each of which assumes a corresponding use function.

When the optical fiber cable 04 uses a 2.0 mm × 1.6 mm bow-type optical fiber cable and the power cable 03 uses a power cable with a cross-sectional area of 1.5 mm², a cross-sectional diameter of the entire optical/electrical hybrid cable may reach 8.8 mm to 9.2 mm. When the optical fiber cable 04 uses a 2.0 mm × 1.6 mm bow-type optical fiber cable and the power cable 03 uses a power cable with a cross-sectional area of 2.5 mm², a cross-sectional diameter of the entire optical/electrical hybrid cable may reach 10.1 mm to 10.5 mm

When the optical/electrical hybrid cable with the structure shown in FIG. 1 is used, the following technical problem occurs: Due to the complex structure, the diameter of the entire optical/electrical hybrid cable is large, which occupies a large laying space in both outdoor pipe laying and overhead laying and indoor ceiling laying and floor laying. Especially, in a use scenario with a limited laying space, a quantity of laid optical/electrical hybrid cables is reduced, and therefore, coverage of an access terminal is limited.

### SUMMARY

Embodiments of this application provide an optical/electrical hybrid cable and an optical communications system, and a main objective is to provide an optical/electrical hybrid cable with a simple structure, a simplified manufacturing process, and a reduced area of a cross section on the premise that a use requirement on an optical fiber cable and a power cable is met.

To achieve the foregoing objective, the following technical solutions are used in embodiments of this application.

According to a first aspect, this application provides an optical/electrical hybrid cable, including:
a linear conductor;
an optical fiber; and
an outer sheath, where the outer sheath tightly wraps exteriors of the conductor and the optical fiber, and the conductor and the optical fiber are arranged side by side.

The optical/electrical hybrid cable provided in this embodiment of this application includes a linear conductor, an optical fiber, and an outer sheath. The outer sheath tightly wraps exteriors of the conductor and the optical fiber, and the conductor and the optical fiber are arranged side by side. During specific implementation, the outer sheath is stripped, so that the outer sheath around the conductor and the outer sheath around the optical fiber are separated. The optical fiber and the outer sheath around the optical fiber form an optical fiber cable, that is, the outer sheath directly serves as a jacket of the optical fiber, so that the optical fiber cable can be mounted on a corresponding interface, to transmit an optical signal. The conductor and the outer sheath around the conductor form a power cable, that is, the outer sheath directly serves as an insulation cladding of the conductor, so that the power cable can be mounted on a corresponding interface, to transmit an electrical signal. In a conventional technology, an outer sheath first needs to be stripped, to separate out an insulation cladding in which a conductor is wrapped to form a power cable, and separate out a jacket that wraps an optical fiber to form an optical fiber cable, and the stripped outer sheath is not utilized. Compared with the conventional technology, in terms of function, the optical/electrical hybrid cable in this embodiment of this application can still form a power cable and an optical fiber cable that are separated, each of which can be connected to a corresponding interface. In terms of structure, it is unnecessary to separately arrange the insulation cladding that wraps the conductor and the jacket that wraps the optical fiber, but the conductor and the optical fiber are wrapped by the outer sheath having an insulation function and a specific strength, thereby simplifying the structure of the optical/electrical hybrid cable. In terms of dimension, on the premise that a radial dimension of the outer sheath configured to wrap the conductor is equivalent to a radial dimension of the insulation cladding in the conventional technology and a radial dimension of the outer sheath configured to wrap the optical fiber is equivalent to a radial dimension of the jacket in the conventional technology, the optical/electrical hybrid cable provided in this embodiment of this application significantly reduces an area of a cross section of the optical/electrical hybrid cable, and finally reduces a laying space occupied by the optical/electrical hybrid cable. Therefore, according to the optical/electrical hybrid cable provided in this embodiment of this application, on the premise that an optical fiber cable and a power cable that are separated can be formed, a structure is simple, a manufacturing process is simplified, and an area of a cross section of the optical/electrical hybrid cable is reduced.

In a possible implementation of the first aspect, the outer sheath has a volume resistivity greater than or equal to 1×1012 Ω·m, a dielectric strength greater than or equal to 20 MV/m, and a temperature resistance range of 70°C to 200°C. With the outer sheath meeting the foregoing conditions, high-temperature resistance and insulation properties of the entire optical/electrical hybrid cable are ensured, and it is convenient for a user to strip the outer sheath.

In a possible implementation of the first aspect, the outer sheath is made of polyvinyl chloride, fluororesin, low smoke zero halogen, or other materials.

In a possible implementation of the first aspect, a cross section of the outer sheath is a right-angle rectangle or a round-angle rectangle. The cross section of the outer sheath is a plane perpendicular to an extension direction of the conductor or a plane perpendicular to an extension direction of the optical fiber. When a formed power cable needs to be plugged into an interface with a radius of R, if the cross section of the optical/electrical hybrid cable is designed to be a circle, to ensure that a power cable with a radius of R can be formed and to reserve a placement space for the optical fiber, a diameter of the cross section of the outer sheath needs to be designed to be 4R. In this case, an area of the cross section of the outer sheath is 4πR2. If the cross section of the outer sheath is designed to be a right-angle rectangle or a round-angle rectangle, to ensure that a power cable with a radius of R can be formed and to reserve a placement space for the optical fiber, a length of one side of the cross section of the outer sheath is 4R, and another side needs to be designed only to 2R. In this case, an area of the cross section of the outer sheath is close to 8R2. Upon comparison between 4πR2 and 8R2, the area of the cross section of the entire optical/electrical hybrid cable is significantly reduced. Therefore, the outer sheath whose cross section is a right-angle rectangle or a round-angle rectangle according to this embodiment of this application further reduces the area of the cross section of the optical/electrical hybrid cable, and reduces an occupied laying space.

In a possible implementation of the first aspect, the conductor includes a first conductor and a second conductor, and the optical fiber is arranged between the first conductor and the second conductor. During specific implementation, one optical/electrical hybrid cable basically needs two power cables, one is a positive power cable and the other is a negative power cable. Therefore, the first conductor and the second conductor are arranged to meet a requirement on the positive power cable and the negative power cable. The optical fiber is arranged between the first conductor and the second conductor. When the optical fiber is separated from the first conductor and the second conductor, the outer sheath may be stripped at positions between the optical fiber and the first conductor and between the optical fiber and the second conductor, so that the outer sheath that wraps the first conductor, the outer sheath that wraps the second conductor, and the outer sheath that wraps the optical fiber are separated, the first conductor and the outer sheath around the first conductor form a positive power cable, the second conductor and the outer sheath around the second conductor form a negative power cable, and the optical fiber and the outer sheath around the optical fiber form an optical fiber cable, each of which can be connected to a respective corresponding interface.

In a possible implementation of the first aspect, stripping structures are arranged on the outer sheath, the stripping structures are arranged on the outer sheath at positions between the first conductor and the optical fiber and at positions between the second conductor and the optical fiber, and the stripping structures are configured to strip the outer sheath, so that the outer sheath around the first conductor, the outer sheath around the optical fiber, and the outer sheath around the second conductor are separated. The stripping structures are arranged on the outer sheath between the first conductor and the optical fiber and between the second conductor and the optical fiber, which significantly improves user experience, as compared with a manner in which a user strips the outer sheath by using a stripping tool.

In a possible implementation of the first aspect, the exterior of the optical fiber is wrapped by a buffer. The exterior of the optical fiber is wrapped by the buffer, so that a strength of a formed optical fiber cable is improved.

In a possible implementation of the first aspect, a stripping structure is arranged on the outer sheath, and the stripping structure is configured to strip the outer sheath, so as to take out, from the outer sheath, the buffer in which the optical fiber is arranged. The stripping structure is arranged on the outer sheath, which significantly improves user experience, as compared with a manner in which a user strips the outer sheath by using a stripping tool.

In a possible implementation of the first aspect, there is one optical fiber, and the stripping structure is arranged on the outer sheath at positions close to the buffer. When there is one optical fiber, the stripping structure needs to be arranged on the outer sheath only at the position close to the buffer, so as to separate out the buffer in which the optical fiber is arranged, and separate the first conductor from the second conductor.

In a possible implementation of the first aspect, there are a plurality of optical fibers, an exterior of each optical fiber is wrapped by a buffer, one of the plurality of buffers that is close to the first conductor is a start buffer, one of the plurality of buffers that is close to the second conductor is an end buffer, the stripping structure is arranged on the outer sheath at a position close to the start buffer, and the stripping structure is arranged on the outer sheath at a position close to the end buffer. When there are a plurality of optical fibers, when the stripping structure is arranged on the outer sheath only at the position close to the start buffer, it may be not easy to strip all the buffers in which an optical fiber is arranged. To strip all the buffers in which an optical fiber is arranged, the stripping structure is arranged on the outer sheath at the position close to the start buffer, and the stripping structure is arranged on the outer sheath at the position close to the end buffer. This helps strip all the buffers in which an optical fiber is arranged, and can prevent a large dimension of an outer sheath configured to wrap the second conductor when the stripping structure is arranged on the outer sheath only at the position close to the start buffer, thereby avoiding a case in which a power cable formed by the second conductor cannot be smoothly plugged into an interface, or even cannot be plugged.

In a possible implementation of the first aspect, the stripping structure includes a stripping notch. The stripping notch is arranged on an outer surface of the outer sheath, and an extension direction of the stripping notch is consistent with an extension direction of the optical fiber. The stripping notch is arranged on the outer surface of the outer sheath, so that a user can conveniently strip the outer sheath, and due to a simple structure of the stripping notch, a manufacturing process can be simplified.

In a possible implementation of the first aspect, the stripping notch includes a first stripping notch and a second stripping notch, and the first stripping notch and the second stripping notch are located on two sides of the buffer. The first stripping notch and the second stripping notch are arranged opposite to each other, so that it is easier to strip the outer sheath.

In a possible implementation of the first aspect, the stripping structure includes a ripcord. The ripcord is arranged within the outer sheath, and an extension direction of the ripcord is consistent with an extension direction of the optical fiber. The ripcord is arranged inside the outer sheath, so that appearance integrity of the entire optical/electrical hybrid cable and a strength of the outer sheath can be ensured, thereby avoiding cracking of the outer sheath in a harsh environment.

In a possible implementation of the first aspect, the ripcord includes a first ripcord and a second ripcord, and the first ripcord and the second ripcord are located on two sides of the buffer. The first ripcord and the second ripcord are arranged opposite to each other, so that it is easier to strip the outer sheath.

In a possible implementation of the first aspect, there are a plurality of optical fibers, centers of cross sections of all the optical fibers, a center of a cross section of the first conductor, and a center of a cross section of the second conductor are located on a first straight line, the cross section of the outer sheath has a first side and a second side opposite to each other, and the first straight line is perpendicular to both the first side and the second side. The cross section of the conductor is a plane perpendicular to an extension direction of the conductor, and the cross section of the optical fiber is a plane perpendicular to an extension direction of the optical fiber. The plurality of optical fibers are arranged, which can ensure that the optical/electrical hybrid cable can form a plurality of optical fiber cables to transmit an optical signal to a plurality of receive ends. In addition, because the first conductor, the second conductor, and the plurality of optical fibers are located on the first straight line, and the first straight line is perpendicular to both the first side and the second side, so that only a dimension in a first direction (a length direction) of the cross section of the outer sheath needs to be increased, a dimension in a second direction (a width direction) remains unchanged, and a formed optical/electrical hybrid cable has a flat structure. Compared with that the dimension in the length direction and the dimension in the width direction of the cross section of the outer sheath are increased, the optical/electrical hybrid cable provided in this embodiment of this application increases only a laying space occupied in one direction (a laying direction in which the length direction is located), to ensure that a laying space occupied in another direction (a laying direction in which the width direction is located) remains unchanged, thereby ensuring a quantity of optical/electrical hybrid cables laid in the laying direction in which the width direction is located.

In a possible implementation of the first aspect, the first straight line passes through a midpoint of the first side and a midpoint of the second side. The center of the cross section of the conductor is located on a connection line between the midpoint of the first side and the midpoint of the second side, and the center of the cross section of the optical fiber is located on the connection line between the midpoint of the first side and the midpoint of the second side, which ensures that an internal structure of the optical/electrical hybrid cable is neat. In particular, a conductor in a formed power cable is close to a central position of the outer sheath, so that the power cable can be smoothly plugged into a corresponding interface.

In a possible implementation of the first aspect, an electrode identification structure is arranged on the outer sheath, and the electrode identification structure is configured to distinguish electrical polarities of the first conductor and the second conductor. During connection to a power cable, to enable a user to conveniently distinguish which one of the two formed power cables is a positive power cable and which one is a negative power cable, the electrode identification structure is arranged on the outer sheath, to provide convenience for the user.

In a possible implementation of the first aspect, the electrode identification structure includes a positive electrode color strip and a negative electrode color strip that are in different colors, and the positive electrode color strip and the negative electrode color strip are both arranged within the outer sheath. The positive electrode color strip is close to the first conductor, and an extension direction of the positive electrode color strip is consistent with an extension direction of the first conductor. The negative electrode color strip is close to the second conductor, and an extension direction of the negative electrode color strip is consistent with an extension direction of the second conductor. The power cable formed by the first conductor is distinguished as the positive power cable by the positive electrode color strip close to the first conductor, the power cable formed by the second conductor is distinguished as the negative power cable by the negative electrode color strip close to the second conductor, and both the positive electrode color strip and the negative electrode color strip are arranged within the outer sheath, which ensures that the positive pole color strip and the negative pole color strip are not easily damaged.

In a possible implementation of the first aspect, the electrode identification structure includes a first groove and a second groove, the first groove and the second groove are both arranged within the outer sheath, and the first groove and the second groove have different structures. The first groove is close to the first conductor, and an extension direction of the first groove is consistent with an extension direction of the first conductor. The second groove is close to the second conductor, and an extension direction of the second groove is consistent with an extension direction of the second conductor.

In a possible implementation of the first aspect, the conductor is annealed oxygen-free copper, aluminum alloy, copper-clad steel, copper alloy, or other metal conductor materials.

In a possible implementation of the first aspect, a messenger wire used to hang the outer sheath is arranged on the outer sheath, and the messenger wire and the outer sheath are integrally formed. When the optical/electrical hybrid cable needs to be arranged overhead, the optical/electrical hybrid cable may be hung by using the messenger wire. In addition, because the messenger wire and the outer sheath are integrally formed, the strength of the entire optical/electrical hybrid cable is improved.

In a possible implementation of the first aspect, an exterior of the outer sheath is wrapped by a reinforcement layer. The reinforcement layer is arranged on the exterior of the outer sheath, to improve the strength of the entire optical/electrical hybrid cable, thereby implementing applicability to a harsh outdoor environment.

In a possible implementation of the first aspect, a reinforcement member is arranged in the reinforcement layer, and an extension direction of the reinforcement member is consistent with an extension direction of the optical fiber or an extension direction of the conductor. To further improve the strength of the optical/electrical hybrid cable, the reinforcement member may be arranged in the reinforcement layer, and the reinforcement member performs a reinforcement function.

In a possible implementation of the first aspect, a filler is arranged between the reinforcement layer and the outer sheath. The strength of the entire optical/electrical hybrid cable can also be improved by using the filler.

In a possible implementation of the first aspect, a cross section of the reinforcement layer is a right-angle rectangle, a round-angle rectangle, or a circle. The cross section of the reinforcement layer is a plane perpendicular to the extension direction of the conductor or a plane perpendicular to the extension direction of the optical fiber.

According to a second aspect, this application further provides an optical communications system, including:
an optical/electrical transmit device, where the optical/electrical transmit device is configured to output an electrical signal and an optical signal; and
an optical/electrical receive device, where the optical/electrical receive device is configured to receive the electrical signal and the optical signal, the optical/electrical transmit device and the optical/electrical receive device are connected by using an optical/electrical hybrid cable, and the optical/electrical hybrid cable is the optical/electrical hybrid cable in the first aspect or any implementation of the first aspect.

According to the optical communications system provided in this embodiment of this application, because the optical communications system includes the optical/electrical hybrid cable according to any one of the foregoing technical solutions, the optical/electrical hybrid cable includes a linear conductor, an optical fiber, and an outer sheath, and the outer sheath tightly wraps exteriors of the conductor and the optical fiber. During specific implementation, the outer sheath is stripped, so that the outer sheath around the conductor and the outer sheath around the optical fiber are separated. The optical fiber and the outer sheath around the optical fiber form an optical fiber cable, that is, the outer sheath directly serves as a jacket of the optical fiber, so that the optical fiber cable can be mounted on a corresponding interface, to transmit an optical signal. The conductor and the outer sheath around the conductor form a power cable, that is, the outer sheath directly serves as an insulation cladding of the conductor, so that the power cable can be mounted on a corresponding interface, to transmit an electrical signal. In a conventional technology, an outer sheath first needs to be stripped, to separate out an insulation cladding in which a conductor is wrapped to form a power cable, and separate out a jacket that wraps an optical fiber to form an optical fiber cable, and the stripped outer sheath is not utilized. Compared with the conventional technology, in terms of function, the optical/electrical hybrid cable can still form a power cable and an optical fiber cable that are separated, so that the power cable has one end connected to the optical/electrical transmit device, and the other end connected to the optical/electrical receive device, and the optical fiber cable has one end connected to the optical/electrical transmit device, and the other end connected to the optical/electrical receive device. In terms of structure, it is unnecessary to separately arrange the insulation cladding that wraps the conductor and the jacket that wraps the optical fiber, but the conductor and the optical fiber are wrapped by the outer sheath having an insulation function and a specific strength, thereby simplifying the structure of the optical/electrical hybrid cable. In terms of dimension, on the premise that a radial dimension of the outer sheath configured to wrap the conductor is equivalent to a radial dimension of an insulation cladding in the conventional technology, the optical/electrical hybrid cable significantly reduces an area of a cross section of the optical/electrical hybrid cable. When the optical/electrical hybrid cable is applied to an indoor optical communications system, because the indoor optical communications system requires a relatively large laying density of optical/electrical hybrid cables to reduce a laying space, with the optical/electrical hybrid cable, a laying space occupied by the optical/electrical hybrid cables can be reduced and a laying density can be increased, to improve coverage of the optical communications system.

In a possible implementation of the second aspect, the optical/electrical transmit device is configured to output electric energy, and the optical/electrical receive device is configured to consume the electric energy.

### BRIEF DESCRIPTION OF DRAWINGS

FIG. 1 is a schematic diagram of a structure of an optical/electrical hybrid cable in a conventional technology;
FIG. 2 is a block diagram of a structure of an optical communications system according to an embodiment of this application;
FIG. 3 is a schematic diagram of a structure of an optical/electrical hybrid cable according to an embodiment of this application;
FIG. 4 is a schematic diagram of a structure of an optical/electrical hybrid cable according to an embodiment of this application;
FIG. 5 is a schematic diagram of a structure of an optical/electrical hybrid cable according to an embodiment of this application;
FIG. 6 is a schematic diagram of comparison between a round-angle rectangle and a circle of a cross section of an outer sheath of an optical/electrical hybrid cable according to an embodiment of this application;
FIG. 7 is a schematic diagram of a structure of an optical/electrical hybrid cable according to an embodiment of this application;
FIG. 8 is a schematic diagram of a structure of an optical/electrical hybrid cable according to an embodiment of this application;
FIG. 9 is a diagram of a use status of an optical/electrical hybrid cable according to an embodiment of this application;
FIG. 10 is a schematic diagram of a structure of an optical/electrical hybrid cable according to an embodiment of this application;
FIG. 11 is a schematic diagram of a structure of an optical/electrical hybrid cable according to an embodiment of this application;
FIG. 12 is a schematic diagram of a structure of an optical/electrical hybrid cable according to an embodiment of this application;
FIG. 13 is a schematic diagram of a structure of an optical/electrical hybrid cable according to an embodiment of this application;
FIG. 14 is a schematic diagram of a structure of an optical/electrical hybrid cable according to an embodiment of this application;
FIG. 15 is a schematic diagram of a structure of an optical/electrical hybrid cable according to an embodiment of this application;
FIG. 16 is a schematic diagram of a structure of an optical/electrical hybrid cable according to an embodiment of this application;
FIG. 17 is a schematic diagram of a structure of an optical/electrical hybrid cable according to an embodiment of this application;
FIG. 18 is a schematic diagram of a structure of an optical/electrical hybrid cable according to an embodiment of this application;
FIG. 19 is a schematic diagram of a structure of an optical/electrical hybrid cable according to an embodiment of this application;
FIG. 20 is a schematic diagram of a structure of an optical/electrical hybrid cable according to an embodiment of this application;
FIG. 21 is a schematic diagram of a structure of an optical/electrical hybrid cable according to an embodiment of this application;
FIG. 22 is a schematic diagram of a structure of an optical/electrical hybrid cable according to an embodiment of this application; and
FIG. 23 is a schematic diagram of a structure of an optical/electrical hybrid cable according to an embodiment of this application.

### DESCRIPTION OF EMBODIMENTS

Embodiments of this application relate to an optical/electrical hybrid cable and an optical communications system. The following describes the optical/electrical hybrid cable and the optical communications system in detail with reference to accompanying drawings.

An embodiment of this application provides an optical communications system. Referring to FIG. 2, the optical communications system includes an optical/electrical transmit device 1 and an optical/electrical receive device 2. The optical/electrical transmit device 1 is configured to output an electrical signal and an optical signal. The optical/electrical receive device 2 is configured to receive the electrical signal and the optical signal. The optical/electrical transmit device 1 and the optical/electrical receive device 2 are connected by using an optical/electrical hybrid cable 3. A power cable in the optical/electrical hybrid cable 3 has one end connected to a power interface of the optical/electrical transmit device 1, and the other end connected to a power interface of the optical/electrical receive device 2. An optical fiber cable in the optical/electrical hybrid cable 3 has one end connected to an optical signal interface of the optical/electrical transmit device 1, and the other end connected to an optical signal interface of the optical/electrical receive device 2. Transmission of the optical signal and the electrical signal is implemented by using the optical/electrical hybrid cable.

The optical/electrical transmit device 1 may further output electric energy, and the optical/electrical receive device 2 may consume the electric energy.

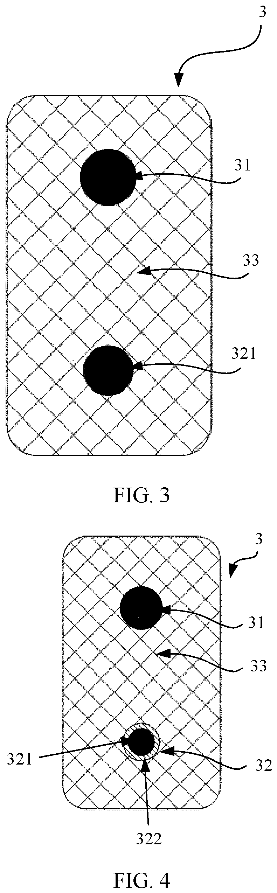

To reduce an area of a cross section of the optical/electrical hybrid cable, an embodiment of this application provides an optical/electrical hybrid cable. Referring to FIG. 3, the optical/electrical hybrid cable 3 includes a linear conductor 31, an optical fiber 321, and an outer sheath 33. The outer sheath 33 tightly wraps exteriors of the conductor 31 and the optical fiber 321, and the conductor 31 and the optical fiber 321 are arranged side by side.

It should be noted that, instead of merely meaning that the conductor 31 and the optical fiber 321 are parallel, that the conductor 31 and the optical fiber 321 are arranged side by side means that the conductor 31 and the optical fiber 321 are parallel or nearly parallel.

A method for using the optical/electrical hybrid cable 3 provided in this embodiment is as follows: The outer sheath 33 is stripped, so that the outer sheath 33 around the conductor 31 and the outer sheath 33 around the optical fiber 321 are separated, the optical fiber 321 and the outer sheath 33 around the optical fiber 321 form an optical fiber cable, and the conductor 31 and the outer sheath 33 around the conductor 31 form a power cable. Alternatively, the outer sheath 33 is stripped at a position close to the optical fiber 321 to ensure integrity of the outer sheath 33 on an exterior of the conductor 31, so that the optical fiber 321 is separated out to form an optical fiber cable 32, and the conductor 31 and the outer sheath 33 around the conductor 31 form a power cable. Therefore, in the optical/electrical hybrid cable, the outer sheath 33 having an insulation property and a specific strength serves as an insulation cladding on the exterior of the conductor 31 and a jacket of the optical fiber 321, which omits the insulation layer that wraps the exterior of the conductor 31 and the jacket on the exterior of the optical fiber, as compared with the conventional technology. In the optical/electrical hybrid cable provided in this embodiment, on the premise of separating the optical fiber cable from the power cable and ensuring strengths of the optical fiber cable and the power cable, a structure is simplified, a manufacturing process is also simplified correspondingly, and cable prefabrication is more convenient. Due to the simplified structure, a weight is reduced, which improves convenience of laying the optical/electrical hybrid cable.

Due to the simplified structure of the optical/electrical hybrid cable, on the premise of ensuring that a radial dimension of the outer sheath configured to wrap the conductor is equivalent to a radial dimension of the insulation cladding and a radial dimension of the jacket in the conventional technology, that is, on the premise of ensuring a final power cable dimension and optical fiber cable dimension, the area of the cross section of the entire optical/electrical hybrid cable is correspondingly reduced. In this way, a laying space occupied by the optical/electrical hybrid cable is reduced, a laying density is increased, and signal coverage of the optical communications system is improved. In addition, because the area of the cross section of the optical/electrical hybrid cable is reduced, on the premise of a fixed length dimension of the optical/electrical hybrid cable, a diameter of a cable coil obtained by winding is reduced, and a space occupied by the cable coil is reduced.

It should be noted that the cross section in this application refers to a plane perpendicular to an extension direction of the conductor or a plane perpendicular to an extension direction of the optical fiber.

To ensure that the outer sheath 33 has both an insulation function and a specific strength, the outer sheath 33 has a volume resistivity greater than or equal to 1×1012 Ω·m (at a test temperature of 20°C), a dielectric strength greater than or equal to 20 MV/m, and a temperature resistance range of 70°C to 200°C. Optionally, the temperature resistance range is 70°C to 105°C. In some implementations, the outer sheath 33 may be made of polyvinyl chloride, fluororesin, or low smoke zero halogen.

The conductor is annealed oxygen-free copper, aluminum alloy, copper-clad steel, copper alloy, or other metal conductor materials.

In a radial direction of the optical fiber, the optical fiber 321 in this embodiment of this application includes a fiber core, a cladding, and a coating that are sequentially arranged from an interior to an exterior. The fiber core completes transmission of the optical signal. The cladding has a refractive index different from that of the fiber core, which encloses the optical signal in the fiber core for transmission and functions to protect the fiber core. The coating serves as a protection structure of the fiber core and the cladding.

To further ensure a strength of the formed optical fiber cable, referring to FIG. 4, the exterior of the optical fiber 321 is wrapped by a buffer 322, and the buffer 322 serves as a secondary protection structure (the coating serves as a primary protection structure) of the optical fiber 321 to enhance the strength of the optical fiber 321. In this application, optionally, the exterior of the optical fiber 321 is wrapped by the buffer 322.

The buffer 322 has a high mechanical strength and a high-temperature resistance characteristic, for example, may be made of nylon, polyurethane, or fluoroplastic.

On the premise of ensuring service performance of the optical/electrical hybrid cable, to further reduce a dimension of the cross section of the optical/electrical hybrid cable, referring to FIG. 3, a cross section of the outer sheath 33 is a right-angle rectangle or a round-angle rectangle. The right-angle rectangle refers to a rectangle with four vertex corners being right angles, and the round-angle rectangle refers to a rectangle with four vertex corners being rounded angles.

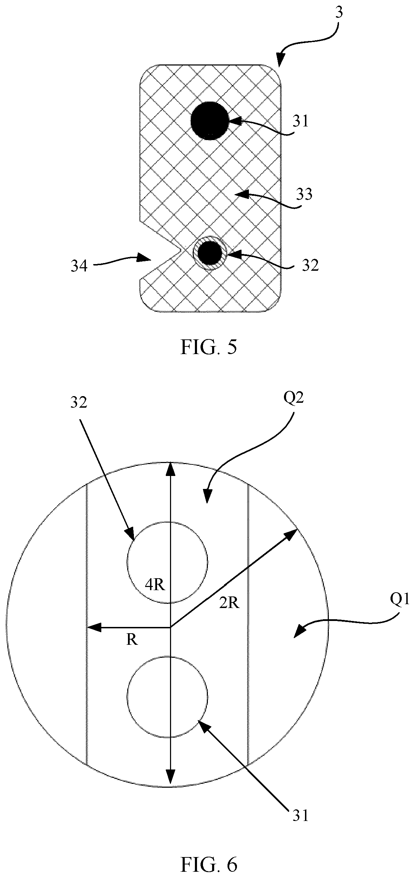

For comparison between an optical/electrical hybrid cable whose cross section is a right-angle rectangle or a round-angle rectangle and an optical/electrical hybrid cable whose cross section is a circle, referring to FIG. 6. When the power cable formed by the optical/electrical hybrid cable needs to be plugged into an interface with a radius of R, if the cross section of the optical/electrical hybrid cable is a circular cross section Q1, to ensure that a power cable with a radius of R can be formed and to reserve a mounting space for the optical fiber, a radius of the circular cross section Q1 is 2R, that is, a diameter is 4R. In this case, an area of the circular cross section Q1 of the outer sheath is 4πR2. When the cross section of the optical/electrical hybrid cable is a right-angle rectangle or a round-angle rectangle Q2, similarly, to ensure that a power cable with a radius of R can be formed and to reserve a placement space for the optical fiber, a length of one side of the rectangle is 4R, and a length of another side is only 2R, because it only needs to be ensured that the power cable with a radius of R is finally formed. In this case, an area of the cross section of the outer sheath is 8R2. Upon comparison between the data 4πR2 and 8R2, it can be learned that the optical/electrical hybrid cable whose cross section is a right-angle rectangle or a round-angle rectangle has a smaller cross-sectional area than the optical/electrical hybrid cable whose cross section is a circle. Therefore, the optical/electrical hybrid cable whose cross section is a right-angle rectangle or a round-angle rectangle is selected in this application. All optical/electrical hybrid cables 3 described below are optical/electrical hybrid cables in which the cross section of the outer sheath 33 is a right-angle rectangle or a round-angle rectangle.

A manner of arranging the conductor 31 and the optical fiber 321 has a plurality of cases. For example, a connection line between a center of a cross section of the conductor 31 and a center of the optical fiber 321 coincides with a diagonal of the right-angle rectangle or the round-angle rectangle. For another example, the connection line between the center of the cross section of the conductor 31 and the center of the optical fiber 321 is parallel to one of two sets of opposite sides of the right-angle rectangle or the round-angle rectangle.

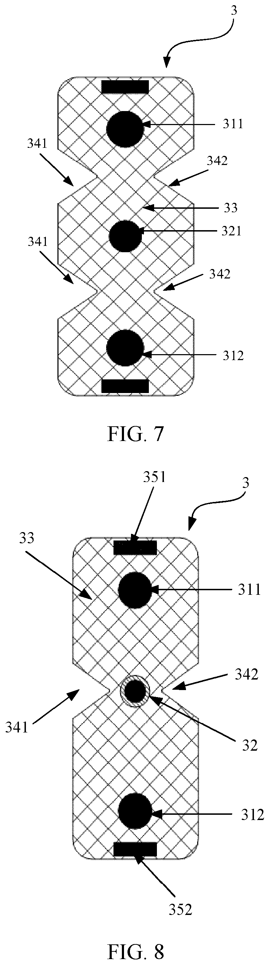

During implementation, a power cable in an optical/electrical hybrid cable usually requires a positive power cable and a negative power cable. To meet this requirement, referring to FIG. 7, the conductor in the optical/electrical hybrid cable 3 includes a first conductor 311 and a second conductor 312. In this case, during use, the first conductor 311 and the outer sheath 33 around the first conductor 311 form a positive power cable, and the second conductor 312 and the outer sheath 33 around the second conductor 312 form a negative power cable. In this way, a use requirement on the positive power cable and the negative power cable can be met.

In some implementations, referring to FIG. 7, the optical fiber 321 is arranged between the first conductor 311 and the second conductor 312. This is because when the optical fiber 321 is arranged between the first conductor 311 and the second conductor 312, during specific implementation, the outer sheath 33 is separated at a position between the first conductor 311 and the optical fiber 321 and separated at a position between the second conductor 312 and the optical fiber 321, so that the first conductor 311 and the outer sheath 33 around the first conductor 311 can form a positive power cable, the second conductor 312 and the outer sheath 33 around the second conductor 312 can form a negative power cable, and the optical fiber 321 and the outer sheath 33 around the optical fiber 321 form an optical fiber cable.

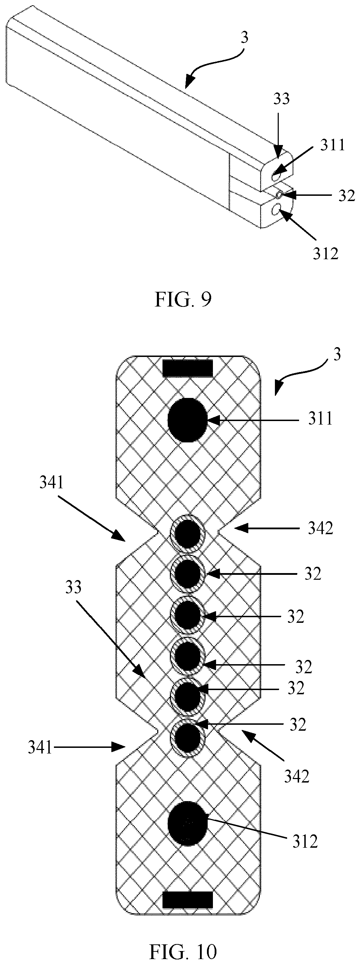

In some implementations, referring to FIG. 10, there are a plurality of optical fibers, so that a plurality of optical fiber cables 32 may be formed. A plurality of optical fibers are arranged to form a multi-core optical unit, so that optical signals can be transmitted to a plurality of receive ends, thereby extending an application range.

As shown in FIG. 10, the cross section of the outer sheath 33 has a first side and a second side opposite to each other, centers of cross sections of all the optical fibers, a center of a cross section of the first conductor 311, and a center of a cross section of the second conductor 312 are located on a first straight line, and the first straight line is perpendicular to both the first side and the second side. This design has the following advantage: The first conductor 311, the second conductor 312, and the plurality of optical fibers are arranged on the first straight line perpendicular to the first side and the second side, so that only a dimension in a first direction (a length direction, that is, a direction in which the first straight line is located) of the cross section of the outer sheath 33 needs to be increased, a dimension in a second direction (a width direction) remains unchanged, and a formed optical/electrical hybrid cable has a flat structure. Compared with that the dimension in the length direction and the dimension in the width direction of the cross section of the outer sheath are increased, the optical/electrical hybrid cable provided in this embodiment of this application increases only a laying space occupied in one direction (a laying direction in which the length direction is located), to ensure that a laying space occupied in another direction (a laying direction in which the width direction is located) remains unchanged, thereby ensuring a quantity of optical/electrical hybrid cables laid in the laying direction in which the width direction is located. When the optical/electrical hybrid cable having a flat structure is wound into a cable coil, a diameter of the cable coil is also reduced.

To make a conductor of a finally formed power cable close to a center of the outer sheath to be smoothly plugged into an interface, the first straight line passes through a midpoint of the first side and a midpoint of the second side. That is, a center of a cross section of the conductor is located on a connection line between the midpoint of the first side and the midpoint of the second side, and the center of the cross section of the optical fiber is also located on the connection line between the midpoint of the first side and the midpoint of the second side. This can ensure that distances between the center of the conductor of the finally formed power cable and outer edges of the outer sheath have a uniform dimension, and when the power cable is specifically plugged, a user can smoothly plug the power cable into an interface, thereby improving user experience.

To further improve user experience, the outer sheath is stripped without a stripping tool. Referring to FIG. 5, a stripping structure 34 is arranged on the outer sheath 33, and the stripping structure 34 is configured to strip the outer sheath 33. The stripping structure 34 is formed on the optical/electrical hybrid cable 3, so that the user can conveniently strip the outer sheath 33.

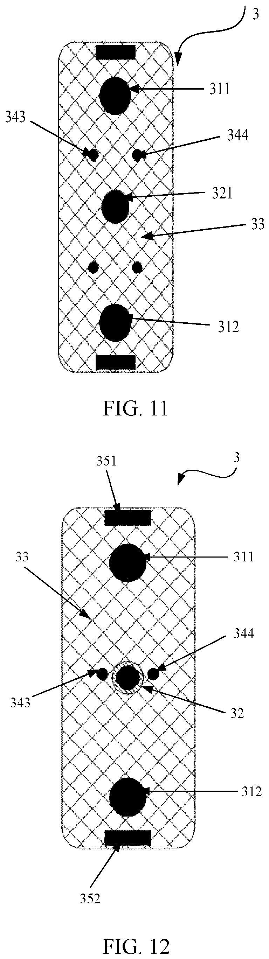

In some implementations, when the exterior of the optical fiber 321 is not wrapped by the buffer 322, referring to FIG. 7 and FIG. 11, stripping structures (341 and 342, and 343 and 344) are arranged on the outer sheath 33 at positions between the optical fiber and the conductors. For example, when the conductor includes the first conductor 311 and the second conductor 312, stripping structures are arranged on the outer sheath 33 at positions between the first conductor 311 and the optical fiber 321, and stripping structures are arranged on the outer sheath 33 at positions between the second conductor 312 and the optical fiber 321. This design has the following advantage: After the outer sheath 33 is stripped, the outer sheath 33 that wraps an exterior of the first conductor 311, the outer sheath 33 that wraps an exterior of the second conductor 312, and the outer sheath that wraps the exterior of the optical fiber 321 are all rectangular structures, and therefore can be smoothly plugged into corresponding interfaces.

In some other implementations, when the exterior of the optical fiber 321 is wrapped by the buffer 322, the stripping structure 34 is arranged on the outer sheath 33 at a position close to the buffer 322. The outer sheath is stripped by using the stripping structure, to take out, from the outer sheath 33, the buffer 322 in which the optical fiber 321 is arranged. The optical fiber 321 and the buffer 322 form an optical fiber cable.

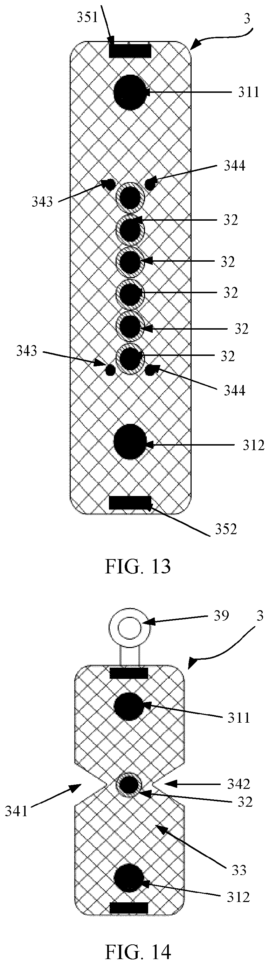

When the exterior of the optical fiber 321 is wrapped by the buffer 322, the stripping structure has a plurality of arrangement manners. For example, referring to FIG. 8 and FIG. 12, there is one optical fiber 321, and a stripping structure is arranged on the outer sheath 33 at a position close to the buffer 322. The stripping structure is arranged only at the position close to the buffer 322, so that the buffer 322 that wraps the optical fiber 321 can be easily taken out from the outer sheath 33 to form an optical fiber cable, and the outer sheath around the first conductor 311 is also separated from the outer sheath 33 around the second conductor 312 to form two power cables (referring to FIG. 9). For another example, referring to FIG. 10 and FIG. 13, there are a plurality of optical fibers, an exterior of each optical fiber is wrapped by a buffer, one of the plurality of buffers that is close to the first conductor 311 is a start buffer, one of the plurality of buffers that is close to the second conductor 312 is an end buffer, a stripping structure is arranged on the outer sheath 33 at a position close to the start buffer, and a stripping structure is arranged on the outer sheath 33 at a position close to the end buffer. That is, when there are a plurality of optical fibers, when the stripping structure is arranged on the outer sheath only at the position close to the start buffer, it may be not easy to strip all the buffers in which an optical fiber is arranged. To strip all the buffers in which an optical fiber is arranged, the stripping structure is arranged on the outer sheath at the position close to the start buffer, and the stripping structure is arranged on the outer sheath at the position close to the end buffer. This helps strip all the buffers in which an optical fiber is arranged, and can prevent a large dimension of an outer sheath configured to wrap the second conductor when the stripping structure is arranged on the outer sheath only at the position close to the start buffer, thereby avoiding a case in which a power cable formed by the second conductor cannot be smoothly plugged into an interface, or even cannot be plugged.

The stripping structure 34 has a plurality of structures. In some implementations, referring to FIG. 7, FIG. 8, and FIG. 10, the stripping structure 34 includes stripping notches (341 and 342). The stripping notches are arranged on an outer surface of the outer sheath 33, and an extension direction of the stripping notches is consistent with the extension direction of the optical fiber. The stripping notches used as a stripping structure have a simple structure and are convenient to be operated by the user. In some other implementations, referring to FIG. 11, FIG. 12, and FIG. 13, the stripping structure 34 includes ripcords (343 and 344), the ripcords are arranged within the outer sheath 33, and an extension direction of the ripcords is consistent with the extension direction of the optical fiber. The ripcords arranged within the outer sheath 33 have a simple structure and are convenient to be operated. In particular, integrity of an exterior of the outer sheath 33 is ensured and a strength of the outer sheath is ensured, thereby avoiding cracking of the outer sheath 33 in a harsh environment. During specific implementation, the ripcords need to be exposed out of the cross section of the outer sheath, so as to facilitate tearing.

The stripping notch has a plurality of structures. For example, a cross section is a triangular structure, as shown in FIG. 8. For another example, a cross section is a trapezoidal structure. A specific structure of the stripping notch is not limited in this application, and any structure falls within the protection scope of this application

To ensure smooth tearing of the outer sheath 33, a tensile strength of the ripcord needs to be greater than the strength of the outer sheath. For example, the ripcord may be made of a steel wire, polyester yarn, or aramid yarn.

Referring to FIG. 8, the stripping notch includes a first stripping notch 341 and a second stripping notch 342, and the first stripping notch 341 and the second stripping notch 342 are located on two sides of the buffer. It is easier to strip the outer sheath by arranging two opposite stripping notches than arranging only one stripping notch.

Referring to FIG. 12, the ripcord includes a first ripcord 343 and a second ripcord 344, and the first ripcord 343 and the second ripcord 344 are located on two sides of the buffer. It is easier to strip the outer sheath by arranging two opposite ripcords than arranging only one ripcord. To reduce a force applied to pull the ripcord, the first ripcord 343 and the second ripcord 344 may be closer to the buffer.

To facilitate identification of electrical polarities of the first conductor 311 and the second conductor 312, an electrode identification structure is arranged on the outer sheath 33, and the electrode identification structure is configured to distinguish the electrical polarities of the first conductor and the second conductor. During connection to a power cable, to enable the user to conveniently distinguish which one of the two formed power cables is a positive power cable and which one is a negative power cable, the electrode identification structure is arranged on the outer sheath, to provide convenience for the user.

The electrode identification structure has a plurality of implementable structures. In some implementations, referring to FIG. 8, the electrode identification structure includes a positive electrode color strip 351 and a negative electrode color strip 352 that are in different colors, and the positive electrode color strip 351 and the negative electrode color strip 352 are both arranged within the outer sheath 33. The positive electrode color strip 351 is close to the first conductor 311, and an extension direction of the positive electrode color strip 351 is consistent with an extension direction of the first conductor 311. The negative electrode color strip 352 is close to the second conductor 312, and an extension direction of the negative electrode color strip 352 is consistent with an extension direction of the second conductor 312. Because the positive electrode color strip and the negative electrode color strip are both arranged within the outer sheath, it is ensured that the positive electrode color strip and the negative electrode color strip are not easily damaged. In some other implementations, the electrode identification structure includes a first groove and a second groove, the first groove and the second groove are both arranged within the outer sheath, and the first groove and the second groove have different structures. The first groove is close to the first conductor, and an extension direction of the first groove is consistent with an extension direction of the first conductor. The second groove is close to the second conductor, and an extension direction of the second groove is consistent with an extension direction of the second conductor. For example, a cross section of the first groove is triangular, and a cross section of the second groove is rectangular. Certainly, the electrode identification structure may alternatively be another structure, which is not exhaustively described herein, and any structure falls within the protection scope of this application.

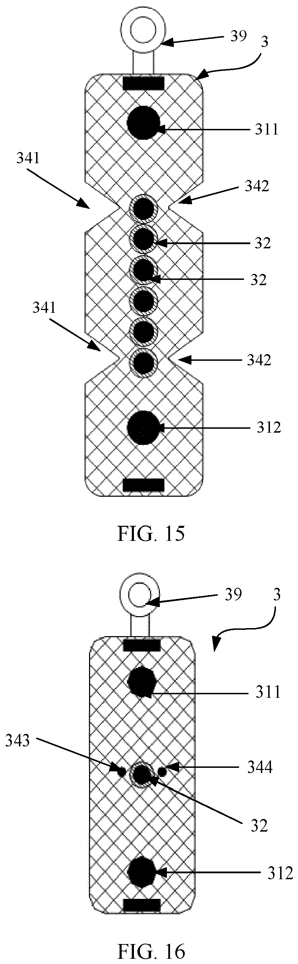

The optical/electrical hybrid cable 3 has many application scenarios, for example, being laid in a mounting groove of a rack or hung on a ceiling. To facilitate hanging of the optical/electrical hybrid cable 3, referring to FIG. 14 to FIG. 17, a messenger wire 39 configured to hang the outer sheath 33 is arranged on the outer sheath 33. That is, convenience of mounting the optical/electrical hybrid cable can be improved by using the messenger wire 39. In some implementations, the messenger wire 39 and the outer sheath 33 are integrally formed. Because the messenger wire and the outer sheath are integrally formed, the strength of the entire optical/electrical hybrid cable is improved. Compared with separate mounting of the messenger wire, prefabrication and molding are convenient and a processing process is simplified.

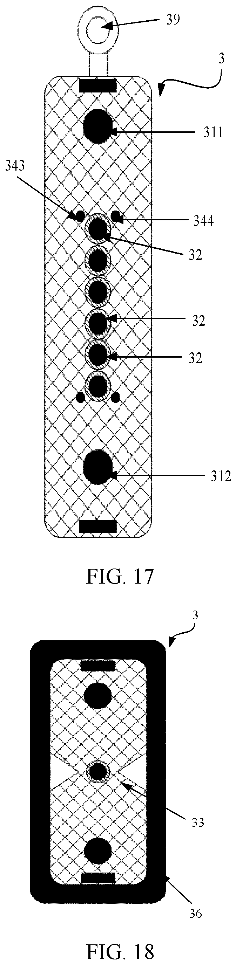

To further improve the strength of the optical/electrical hybrid cable, referring to FIG. 18, the exterior of the outer sheath 33 is wrapped by a reinforcement layer 36. The reinforcement layer 36 is arranged on the exterior of the outer sheath 33, to improve the strength of the entire optical/electrical hybrid cable 3, thereby implementing applicability to a harsh outdoor environment and expanding an application scenario of the optical/electrical hybrid cable.

To ensure that the reinforcement layer has both an insulation function and a specific strength, in some implementations, the reinforcement layer 36 may be made of polyethylene, flame retardant polyethylene, polyolefin, polyvinyl chloride, low smoke zero halogen, or other materials.

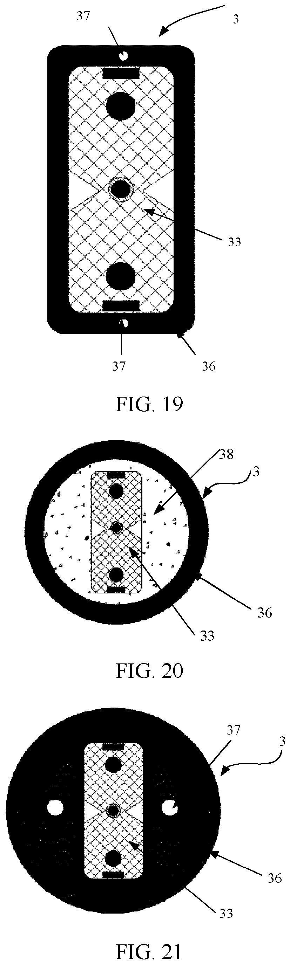

Referring to FIG. 19 and FIG. 21, a reinforcement member 37 is arranged in the reinforcement layer 33, and an extension direction of the reinforcement member 37 is consistent with the extension direction of the optical fiber or the extension direction of the conductor. The reinforcement member 37 is arranged in the reinforcement layer 36, so that the reinforcement member performs a reinforcement function, and the strength of the optical/electrical hybrid cable is further improved.

Referring to FIG. 20, a filler 38 is arranged between the reinforcement layer 36 and the outer sheath 33. The strength of the entire optical/electrical hybrid cable can also be improved by using the filler 38.

Referring to FIG. 18 and FIG. 19, a cross section of the reinforcement layer 36 is a right-angle rectangle or a round-angle rectangle. Referring to FIG. 20 and FIG. 21, a cross section of the reinforcement layer is a circle.

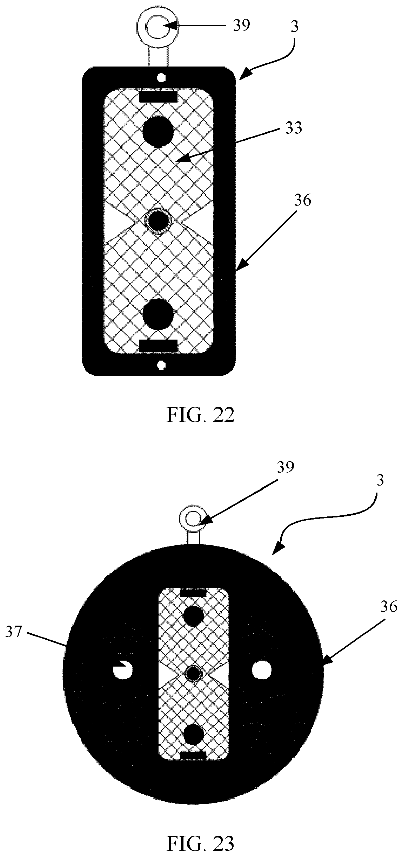

To facilitate hanging of the optical/electrical hybrid cable on which the reinforcement layer 36 is arranged on the exterior, referring to FIG. 22 and FIG. 23, a messenger wire 39 configured to hang the reinforcement layer 36 is arranged on the reinforcement layer 36 on the outer sheath 33. The messenger wire 39 and the reinforcement layer 36 may be integrally formed.

In the descriptions of this specification, the specific features, structures, materials, or characteristics may be combined in a proper manner in any one or more of the embodiments or examples.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An optical/electrical hybrid cable, comprising:
a linear conductor;
an optical fiber; and
an outer sheath, wherein the outer sheath tightly wraps exteriors of the conductor and the optical fiber, and the conductor and the optical fiber are arranged side by side.

2. The optical/electrical hybrid cable according to claim 1, wherein the outer sheath has a volume resistivity greater than or equal to 1×1012 Ω·m, a dielectric strength greater than or equal to 20 MV/m, and a temperature resistance range of 70°C to 200°C.

3. The optical/electrical hybrid cable according to claim 2, wherein the outer sheath is made of polyvinyl chloride, fluororesin, or low smoke zero halogen.

4. The optical/electrical hybrid cable according to any one of claims 1 to 3, wherein a cross section of the outer sheath is a right-angle rectangle or a round-angle rectangle.

5. The optical/electrical hybrid cable according to claim 4, wherein the conductor comprises a first conductor and a second conductor, and the optical fiber is arranged between the first conductor and the second conductor.

6. The optical/electrical hybrid cable according to claim 5, wherein stripping structures are arranged on the outer sheath, the stripping structures are arranged on the outer sheath at positions between the first conductor and the optical fiber and at positions between the second conductor and the optical fiber, and the stripping structures are configured to strip the outer sheath, so that the outer sheath around the first conductor, the outer sheath around the optical fiber, and the outer sheath around the second conductor are separated.

7. The optical/electrical hybrid cable according to claim 5, wherein the exterior of the optical fiber is wrapped by a buffer.

8. The optical/electrical hybrid cable according to claim 7, wherein a stripping structure is arranged on the outer sheath, and the stripping structure is configured to strip the outer sheath, so as to take out, from the outer sheath, the buffer in which the optical fiber is arranged.

9. The optical/electrical hybrid cable according to claim 8, wherein there is one optical fiber, and the stripping structure is arranged on the outer sheath at a position close to the buffer.

10. The optical/electrical hybrid cable according to claim 8, wherein there are a plurality of optical fibers, an exterior of each optical fiber is wrapped by a buffer, one of the plurality of buffers that is close to the first conductor is a start buffer, one of the plurality of buffers that is close to the second conductor is an end buffer, the stripping structure is arranged on the outer sheath at a position close to the start buffer, and the stripping structure is arranged on the outer sheath at a position close to the end buffer.

11. The optical/electrical hybrid cable according to any one of claims 8 to 10, wherein the stripping structure comprises:
a stripping notch, wherein the stripping notch is arranged on an outer surface of the outer sheath, and an extension direction of the stripping notch is consistent with an extension direction of the optical fiber.

12. The optical/electrical hybrid cable according to claim 11, wherein the stripping notch comprises a first stripping notch and a second stripping notch, and the first stripping notch and the second stripping notch are located on two sides of the buffer.

13. The optical/electrical hybrid cable according to any one of claims 8 to 10, wherein the stripping structure comprises:
a ripcord, wherein the ripcord is arranged within the outer sheath, and an extension direction of the ripcord is consistent with an extension direction of the optical fiber.

14. The optical/electrical hybrid cable according to claim 13, wherein the ripcord comprises a first ripcord and a second ripcord, and the first ripcord and the second ripcord are located on two sides of the buffer.

15. The optical/electrical hybrid cable according to any one of claims 5 to 8 and 10 to 14, wherein there are a plurality of optical fibers, centers of cross sections of all the optical fibers, a center of a cross section of the first conductor, and a center of a cross section of the second conductor are located on a first straight line, the cross section of the outer sheath has a first side and a second side opposite to each other, and the first straight line is perpendicular to both the first side and the second side.

16. The optical/electrical hybrid cable according to any one of claims 5 to 15, wherein an electrode identification structure is arranged on the outer sheath, and the electrode identification structure is configured to distinguish electrical polarities of the first conductor and the second conductor.

17. The optical/electrical hybrid cable according to any one of claims 1 to 16, wherein a messenger wire used to hang the outer sheath is arranged on the outer sheath, and the messenger wire and the outer sheath are integrally formed.

18. The optical/electrical hybrid cable according to any one of claims 1 to 17, wherein an exterior of the outer sheath is wrapped by a reinforcement layer.

19. An optical communications system, comprising:
an optical/electrical transmit device, wherein the optical/electrical transmit device is configured to output an electrical signal and an optical signal; and
an optical/electrical receive device, wherein the optical/electrical receive device is configured to receive the electrical signal and the optical signal, the optical/electrical transmit device and the optical/electrical receive device are connected by using an optical/electrical hybrid cable, and the optical/electrical hybrid cable is the optical/electrical hybrid cable according to any one of claims 1 to 18.

20. The optical communications system according to claim 19, wherein the optical/electrical transmit device is configured to output electric energy, and the optical/electrical receive device is configured to consume the electric energy.
